# EUROPEAN PATENT APPLICATION

(11) **EP 4 693 661 A1**
(43) Date of publication of application: **11.02.2026**
(21) Application number: 24889045.1
(22) Date of filing: 01.11.2024
(51) Int. Cl.: H01M 50/256, B65G 7/12

(54) **BATTERY MODULE TRANSPORTATION DEVICE**

(30) Priority: 06.11.2023 KR 20230151846
(71) Applicant: LG Energy Solution, Ltd., Seoul 07335 (KR)
(72) Inventor: HAM, Jiwon, Daejeon 34122 (KR); JANG, Kyungsoo, Daejeon 34122 (KR)
(74) Representative: Plasseraud IP
(86) International application number: PCT/KR2024/017048
(87) International publication number: WO 2025/100857

(57) **Abstract**

A battery module transportation device is provided. The battery module transportation device according to one aspect of the present specification is detachably mounted in a first hole in the horizontal direction and a second hole in the vertical direction, each provided at one of two side portions of a battery module, so as to transport the battery module, and comprises: a body unit arranged on the side portion of the battery module; a first fixing unit including an extension part, which extends downward along the side portion of the battery module from the body unit, and a protruding part, which protrudes toward the side portion of the battery module from the extension part so as to be inserted into the first hole; and a second fixing unit which protrudes downward from the body unit so as to be seated in the second hole, and which can move vertically.

## Description

### Technical Field

The present disclosure relates to an apparatus for carrying a battery module. More specifically, the present disclosure relates to an apparatus for carrying a battery module, which is simply and firmly mounted on the battery module so that a worker may easily carry the battery module.

### Background Art

A lithium secondary battery is a battery storing and generating electric energy by intercalation and deintercalation of lithium ions in a cathode and an anode.

Recently, the lithium secondary battery is widely used for driving or energy storage, not only in small apparatuses such as a mobile electronic device but also in medium-sized and large apparatuses such as an electric vehicle or an energy storage system (ESS).

As one form of the power apparatuses using this lithium secondary battery, a form in which multiple battery cells are placed within a module case together in an electrically connected state to compose a battery module and multiple battery modules are placed within a battery pack housing together in an electrically connected state to compose a battery pack is widely used.

In the battery manufacturing process, carrying a battery module is frequently performed. For example, carrying the battery module may be performed when positioning the battery module within a battery pack housing in the assembly process of a battery pack or when positioning the battery module in an attachment apparatus for attaching an insulating/fire retardant sheet (for example, a mica sheet) to an outer peripheral surface of the battery module.

Previously, as a carrying method to carry a battery module, a method of suctioning and carrying the battery module with a rubber suction tool or gripping and carrying the battery module using a clamp has been used.

However, when carrying the battery module using the rubber suction tool, there is a falling problem of the battery module in the process of carrying the battery module since the rubber suction tool is not attached properly to the battery module due to irregularities such as a resin checking hole formed on an outer peripheral surface of the battery module. In addition, when carrying the battery module using the clamp, there is also the falling problem of the battery module since the grip of the clamp loosens due to the weight of the battery module. Such fall of the battery module causes damage to the battery module or injury to a worker.

Further, when carrying the battery module using the clamp, the process of attaching or detaching the clamp to or from the battery module is cumbersome, leading to a problem of reducing workability.

### Detailed Description of the Invention

### Technical Goals

The present disclosure is conceived to resolve at least some of the above problems in the existing art and is directed to providing a battery module carrying apparatus that may prevent a battery module from falling by firmly gripping the battery module, and through this, prevent damage to the battery module and injury to a worker.

In addition, it is intended to provide a battery module carrying apparatus that may improve workability through a simple interlocking structure with a battery module.

### Technical solutions

To achieve the above goals, a battery module carrying apparatus according to an aspect of the present disclosure is detachably mounted in a first hole in a horizontal direction and a second hole in a vertical direction that are provided at each of both side portions of a battery module to carry the battery module, the battery module carrying apparatus including a body part disposed on a side portion of the battery module, a first fixing part including an extension part extending downwards along the side portion of the battery module from the body part and a protruding part protruding from the extension part toward the side portion of the battery module in order to be inserted in the first hole, and a second fixing part protruding downwards from the body part to be seated in the second hole, and the second fixing part may be configured to be movable upwards and downwards.

Through this, the battery module may be prevented from falling by firmly gripping the battery module, and through this, damage to the battery module and injury to a worker may be prevented.

In addition, workability may be improved through a simple interlocking structure with the battery module

In addition, the body part may include a base part, when the battery module carrying apparatus is mounted on the battery module, of which a relative position to the battery module is fixed and to which the first fixing part is connected and a moving part disposed below the base part to be movable upwards and downwards relative to the base part, to a lower portion of which the second fixing part is connected, and the second fixing part may be inserted in the second hole when the moving part descends and be removed from the second hole when the moving part ascends.

In addition, the moving part may be provided with a restoring force in a downward direction so that the second fixing part in an ascending state descends to be positioned in a state inserted in the second hole.

In addition, the body part may further include a shaft protruding above the moving part and penetrating the base part, a stopper connected to the shaft above the base part to limit a maximum descending position of the moving part, and an elastic member disposed between the base part and the moving part.

In addition, the battery module carrying apparatus may further include an outer handle connected to an upper portion of the base part and an inner handle connected to an upper portion of the stopper, and, as the inner handle is pulled upwards relative to the outer handle, the moving part may ascend.

In addition, a distance between the base part and the moving part when the moving part descends maximally in a state where the battery module carrying apparatus is unmounted on the battery module may be greater than a distance between the base part and the moving part in a state where the battery module carrying apparatus is mounted on the battery module.

In addition, the extension part may include a first portion provided in a plate shape.

In addition, the extension part may include a plurality of second portions extending downwards from the first portion, and the protruding part may protrude from a lower area of each of the plurality of second portions toward the battery module.

In addition, the extension part may be length adjustable upwards and downwards.

In addition, the protruding part may decrease in thickness in an upward and downward direction toward the battery module.

In addition, the second fixing part may include a spacer and an insertion part protruding downwards from the spacer to be inserted in the second hole of the battery module, and a diameter of the spacer may be greater than a diameter of the second hole.

In addition, a length of the spacer in an upward and downward direction may be greater than a distance between an upper surface of the battery module and an upper end of the second hole.

### Effects of the Invention

Through a battery module carrying apparatus according to the present disclosure, it is possible to prevent a battery module from falling by firmly gripping the battery module, and through this, prevent damage to the battery module and injury to a worker.

In addition, it is possible to improve workability through a simple interlocking structure with a battery module.

### Brief Description of Drawings

FIG. 1 is a perspective view illustrating a state where a battery module is interlocked with a battery module carrying apparatus according to an example embodiment of the present disclosure.
FIG. 2 is a perspective view illustrating a portion of a battery module and a battery module carrying apparatus according to an example embodiment of the present disclosure.
FIG. 3 is a perspective view of a battery module carrying apparatus, viewed from a different angle, according to an example embodiment of the present disclosure.
FIG. 4 is an exploded perspective view of a battery module carrying apparatus according to an example embodiment of the present disclosure.
FIG. 5 is a perspective view illustrating a state when pulling an inner handle of a battery module carrying apparatus according to an example embodiment of the present disclosure.

### Mode for Carrying Out the Invention

Before describing the present disclosure in detail, the words and terminologies used in the specification and claims are not to be construed as limited to common or dictionary meanings but construed as meanings and concepts coinciding with the technical idea of the present disclosure under the principle that the inventor(s) may appropriately define the concept of the terms to explain his or her own invention in the best manner. Therefore, the example embodiments described in the specification and the configurations illustrated in the drawings are no more than the most preferred example embodiments of the present disclosure and do not fully cover the technical idea of the present disclosure. Accordingly, it should be understood that there may be various equivalents and modifications that may replace those when this application is filed.

Like reference numerals or signs in each drawing attached to the specification may refer to components or elements performing substantially like functions. For convenience of description and understanding, the same reference numeral or sign may be used for description in different example embodiments. In other words, even though elements with the same reference numeral are illustrated in a plurality of drawings, all of the plurality of drawings may not represent a single example embodiment.

In the following description, a singular expression includes a plural expression unless apparently otherwise defined by context. It should be understood that terms such as "comprise or include" and "form or compose" are intended to indicate the presence of a feature, a number, a step, an operation, an element, a component, or a combination thereof which are described in the specification and not intended to previously exclude the possibility of the presence or addition of one or more other features, numbers, steps, operations, elements, components, or combinations thereof.

In addition, expressions such as upper side, upper portion, above, lower side, lower portion, below, side surface, front surface, and back surface hereinafter are represented with respect to a direction illustrated in a drawing and may be represented otherwise when the direction of a corresponding object changes.

Further, terms including ordinal numbers such as "first" and "second" may be used to differentiate between elements in the specification and claims. These ordinal numbers may be used to differentiate identical or similar elements from each other, and the use of the ordinal numbers may not limit the meanings of terms. As an example, an element combined with an ordinal number is not to be construed as the using order or arrangement sequence thereof is limited by the ordinal number. In some cases, each ordinal number may also be used by replacing each other.

Hereinafter, example embodiments of the present disclosure are described with reference to the accompanying drawings. However, the idea of the present disclosure is not limited to the example embodiments described. For example, a person of ordinary skill in the art understanding the idea of the present disclosure may suggest other example embodiments included within the scope of the idea of the present disclosure through addition, change, or deletion of an element, which, however, are also included within the scope of the present disclosure. The shape or size of elements in drawings may be exaggerated for clearer description.

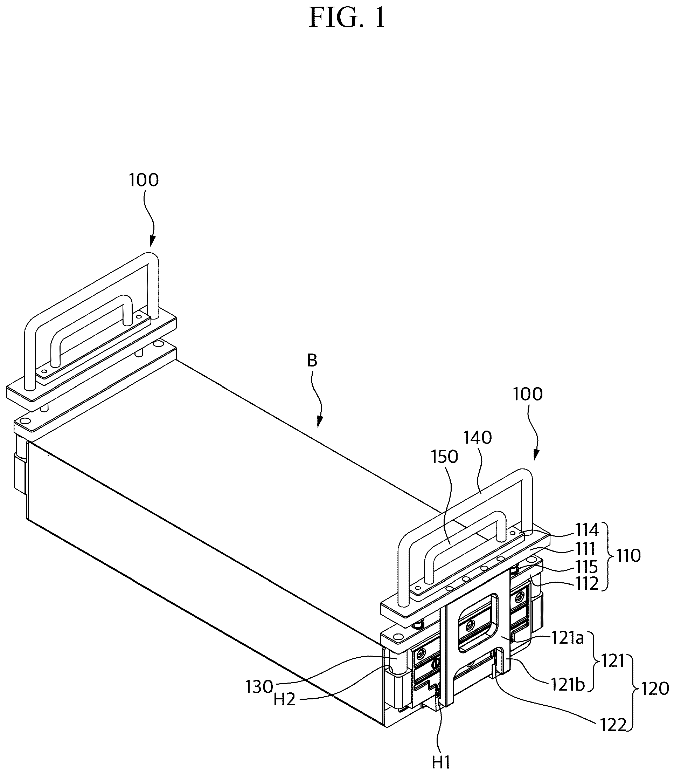

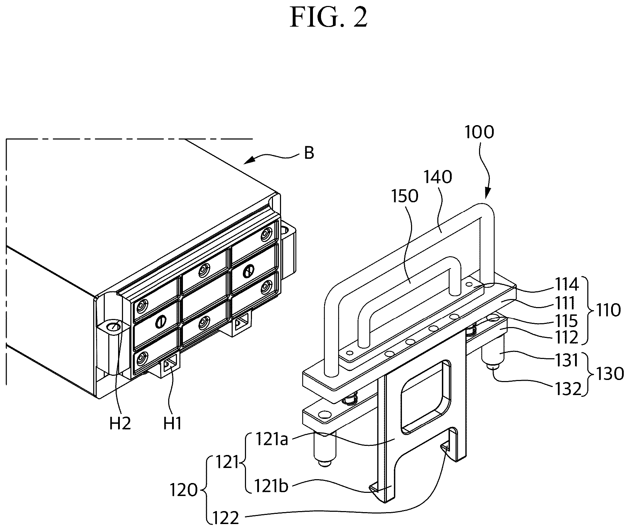

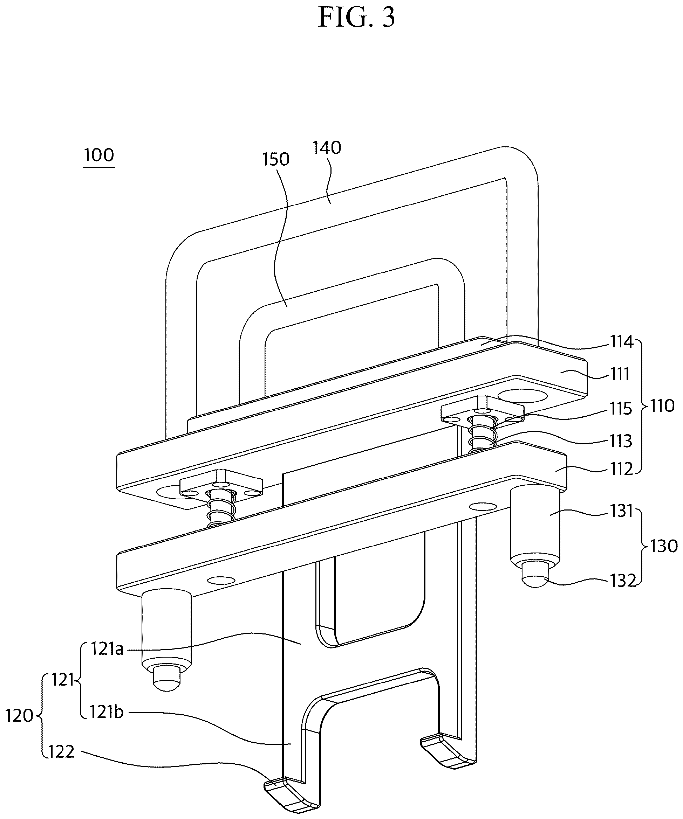

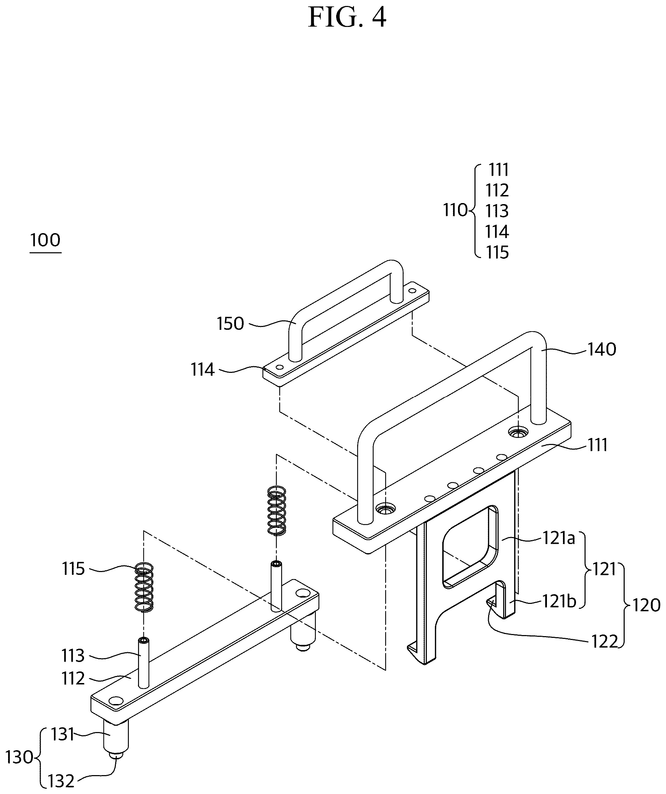

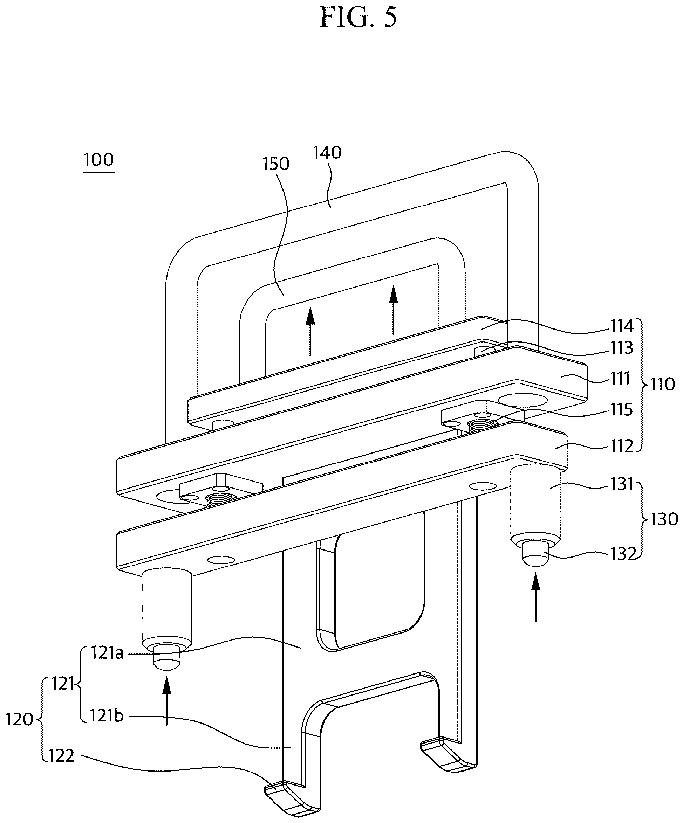

FIG. 1 is a perspective view illustrating a state where a battery module is interlocked with a battery module carrying apparatus according to an example embodiment of the present disclosure. FIG. 2 is a perspective view illustrating a portion of a battery module and a battery module carrying apparatus according to an example embodiment of the present disclosure. FIG. 3 is a perspective view of a battery module carrying apparatus, viewed from a different angle, according to an example embodiment of the present disclosure. FIG. 4 is an exploded perspective view of a battery module carrying apparatus according to an example embodiment of the present disclosure. FIG. 5 is a perspective view illustrating a state when pulling an inner handle of a battery module carrying apparatus according to an example embodiment of the present disclosure.

Hereinafter, a case where a battery module carrying apparatus 100 according to an example embodiment of the present disclosure grips and carries a battery module B in a state turned upside down is described as an example. However, not being limited thereto, the battery module carrying apparatus 100 according to an example embodiment of the present disclosure may also grip the battery module B in a state not turned upside down.

Hereinafter, irrespective of whether the battery module carrying apparatus 100 is interlocked with the battery module B in the state turned upside down or interlocked with the battery module B not turned upside down, a bottom of the battery module B with respect to FIG. 1 is referred to as a lower portion and a top of the battery module B is referred to as an upper portion.

Referring to FIGS. 1 and 2, a first hole H1 may be formed on the battery module B. The first hole H1 may be formed in a horizontal direction at both side portions of the battery module B. Two first holes H1 may be formed in parallel in the horizontal direction at both side portions of the battery module B. The first hole H1 may be referred to as a manipulator hole.

A second hole H2 may be formed on the battery module B. The second hole H2 may be formed in a vertical direction at both side portions of the battery module B. Two second holes H2 may be formed at both edge areas of a side portion of the battery module B. The second hole H2 may be formed at a mid-height area of the battery module B. The second hole H2 may be formed to be penetrated upwards and downwards. The second hole H2 may be referred to as a mounting hole.

Referring to FIGS. 1 and 2, the battery module carrying apparatus 100 may be detachably mounted in the first hole H1 and the second hole H2 provided at each of both side portions of the battery module B. In other words, to carry one battery module B, two battery module carrying apparatuses 100 may be mounted on both side portions of the battery module B respectively, and a worker may grip the two battery module carrying apparatuses 100 mounted on the battery module B to carry the battery module B.

Referring to FIGS. 1 to 5, the battery module carrying apparatus 100 may include a body part 110. The body part 110 may be disposed on a side portion of the battery module B.

The body part 110 may include a base part 111. The base part 111 may be a portion where a relative position to the battery module B is fixed when the battery module carrying apparatus 100 is mounted on the battery module B. The base part 111 may have a bar shape extending horizontally or a plate shape extending horizontally. A first fixing part 120 may be connected to the base part 111.

The body part 110 may include a moving part 112. The moving part 112 may be disposed below the base part 111. The moving part 112 may be spaced apart from the base part 111 at a predetermined interval. The moving part 112 may be disposed on the side portion of the battery module B when the battery module carrying apparatus 100 is mounted on the battery module B. A second fixing part 130 may be connected to a lower portion of the moving part 112.

The moving part 112 may have a bar shape extending horizontally or a plate shape extending horizontally. However, not being limited thereto, the moving part 112 may also be composed of two members arranged in the horizontal direction.

The moving part 112 may move upwards and downwards relative to the base part 111. The moving part 112 may ascend as an inner handle 150 is pulled upwards relative to an outer handle 140. The moving part 112 may descend as the upward pull of the inner handle 150 is released.

In contrast, the moving part 112 may also move in an upward and downward direction in a motorized manner. For example, the body part 110 may be equipped with an electric motor, and as a shaft 113 is moved in the upward and downward direction by the rotation of the electric motor (for example, a worm gear manner), the moving part 112 may move in the upward and downward direction. In this case, operating the electric motor may be executed by a button provided on the outer handle 140.

The moving part 112 may be provided with a restoring force in a downward direction so that the second fixing part 130 in an ascending state descends to be positioned in a state inserted in the second hole H2 of the battery module B. Specifically, the moving part 112 may be provided with an elastic restoring force downwards by the compression of an elastic member 115 provided between the moving part 112 and the base part 111.

A distance between the base part 111 and the moving part 112 when the moving part 112 descends maximally in a state where the battery module carrying apparatus 100 is unmounted on the battery module B (in other words, when a stopper 114 is in a state in contact with an upper surface of the base part 111) may be greater than a distance between the base part 111 and the moving part 112 in a state where the battery module carrying apparatus 100 is mounted on the battery module B. This may be understood as the elastic member 115 disposed between the base part 111 and the moving part 112 maintaining a state compressed at a predetermined level when the battery module carrying apparatus 100 is mounted on the battery module B. Through this, since the moving part 112 and the second fixing part 130 connected thereto are continuously provided with the elastic restoring force downwards by the elastic member 115 in the state where the battery module carrying apparatus 100 is mounted on the battery module B, the battery module carrying apparatus 100 may be stably mounted on the battery module B.

Referring to FIGS. 3 and 4, the body part 110 may include the shaft 113. The shaft 113 may protrude above the moving part 112 and penetrate the base part 111 and may be slid relative to the base part 111 in a penetrated state. Through this structure and movement, the shaft 113 may guide an upward and downward movement of the moving part 112.

At least two shafts 113 may be provided. Two shafts 113 may be arranged in the horizontal direction. When viewed from a lateral direction of the battery module B, the shafts 113 may be disposed at positions symmetrical left and right with respect to a central area of the battery module B. As the two shafts 113 are arranged at the positions symmetrical to each other in the horizontal direction, power applied to the inner handle 150 by the worker and the elastic restoring force by the elastic member 115 may be evenly transferred to both side portions of the moving part 112.

However, not being limited thereto, if a member guiding the upward and downward movement of the moving part 112 may be provided separately from the shaft 113, or if the shaft 113 may be provided at a central area of the moving part 112 and thus power applied to the inner handle 150 by the worker and the elastic restoring force by the elastic member 115 may be evenly transferred to the moving part 112, only one shaft 113 may also be provided. In addition, a structure in which two or more shafts 113 are provided and arranged in the horizontal direction is also not excluded.

Referring to FIGS. 1 to 5, the body part 110 may include the stopper 114. The stopper 114 may be disposed above the base part 111. The stopper 114 may be connected to the shaft 113 penetrating the base part 111. The stopper 114 may limit a maximum descending position of the moving part 112. Specifically, as the stopper 114 catches on the upper surface of the base part 111 at a maximum descending height of the moving part 112, an additional descent of the moving part 112 may be limited.

The stopper 114 may have a bar shape extending in the horizontal direction or may have a plate shape extending in the horizontal direction. However, not being limited thereto, the stopper 114 may also be provided only at a position corresponding to a position of a through hole of the base part 111 penetrated by the shaft 113. For example, when two shafts 113 are provided and two through holes corresponding thereto are provided in the base part 111, two stoppers 114 corresponding to a position of each through hole may be provided.

The body part 110 may include the elastic member 115. The elastic member 115 may be disposed between the base part 111 and the moving part 112. The elastic member 115 may be compressed based on an ascent of the moving part 112. The elastic member 115 may provide the elastic restoring force to the moving part 112 in the downward direction.

The elastic member 115 may be, for example, a spring, and the elastic member 115 may be disposed to surround the shaft 113. Through this, the elastic member 115 may be stably disposed between the base part 111 and the moving part 112.

However, not being limited thereto, the shaft 113 may be have a telescopic structure composed of two members and thus the elastic member 115 may also be disposed on an inner side of the shaft 113. In addition, the elastic member 115 may also be composed of a member having elasticity such as a rubber material.

The battery module carrying apparatus 100 may include the first fixing part 120. The first fixing part 120 may extend from the body part 110, specifically from the base part 111. The first fixing part 120 may be a portion where a load of the battery module B is transferred directly to the battery module carrying apparatus 100. A specific structure of the first fixing part 120 is as follows.

The first fixing part 120 may include an extension part 121. The extension part 121 may extend downwards along the side portion of the battery module B from the body part 110. The extension part 121 may be disposed on an outside of the moving part 112 with respect to the battery module B.

The extension part 121 may include a first portion 121a. An upper end of the first portion 121a may be coupled to the base part 111. The first portion 121a may be provided in a plate shape. The first portion 121a may be a portion for transferring the load of the battery module B transferred from a second portion 121b to the base part 111, and when the first portion 121a is provided in the plate shape, the durability of the first fixing part 120 may be improved and a coupling force between the base part 111 and the first fixing part 120 may be improved due to a widening contact area and coupling area between the first fixing part 120 and the base part 111, and thus, the battery module B may be stably lifted.

A central area of the first portion 121a may be hollowed out. For example, as illustrated in FIGS. 1 to 5, when the second portion 121b protrudes downwards from both side portions of a lower edge of the first portion 121a, the load of the battery module B transferred from the second portion 121b may be transferred to the base part 111 mainly along both side edge portions of the first portion 121a. Therefore, if the central area excluding such main load transfer path of the battery module B is hollowed out, a load of the battery module carrying apparatus 100 may be reduced, which may improve the work efficiency of the worker. However, unlike this, the central area of the first portion 121a may not necessarily be hollowed out.

The extension part 121 may include the second portion 121b. The second portion 121b may extend under the first portion 121a. It may be preferable that the second portion 121b be provided integrally with the first portion 121a to secure the durability of the extension part 121.

The second portion 121b may extend downwards at a position corresponding to the first hole H1 of the battery module B in the lower edge of the first portion 121a. For example, at positions corresponding to two first holes H1 formed on the battery module B, the second portion 121b may extend downwards in two directions from the first portion 121a. Through such structure, a field of sight to view the first hole H1 of the battery module B between the second portion 121b may be secured, and thus, the worker may easily seat a protruding part 122 protruding from the second portion 121b in the first hole H1.

Unlike the above description, the extension part 121 may not include the second portion 121b. For example, the first portion 121a provided in the plate shape may extend downwards to the position corresponding to the first hole H1 of the battery module B from the base part 111, and the protruding part 122 may protrude from the first portion 121a toward the battery module B. In this case, the durability of the extension part 121 may be further improved.

In addition, the extension part 121 may not include the first portion 121a provided in the plate shape. For example, if the strength of the extension part 121 may be sufficiently secured, the extension part 121 may extend downwards in two directions from the base part 111. In this case, since a field of sight for the battery module B may be easily secured, the worker may mount the battery module carrying apparatus 100 on the battery module B more easily.

Unlike what is illustrated in FIGS. 1 to 5, the extension part 121 may be length adjustable upwards and downwards. A height of the protruding part 122 may be adjusted based on a length adjustment of the extension part 121.

Specifically, unlike what is illustrated in FIGS. 1 and 2, when the first hole H1 is not formed on the battery module B, the battery module carrying apparatus 100 may also be mounted on the battery module B in such a manner that the protruding part 122 catches on a protrusion formed at the side portion of the battery module B or on a lower corner of the side portion of the battery module B, and in this case, a length of the extension part 121 is needed to be adjusted so that the protruding part 122 is positioned at a height corresponding to the protrusion formed at the side portion of the battery module B or the lower corner of the side portion of the battery module B.

In addition, unlike what is described as an example in this specification, when the battery module carrying apparatus 100 is mounted on the battery module B in the state where the battery module B is not turned upside down (in other words, unlike what is illustrated in FIGS. 1 and 2, a state where the first hole H1 is formed at an upper area of the side portion of the battery module B), the length of the extension part 121 is needed to be adjusted so that the protruding part 122 is positioned at a height corresponding to the first hole H1.

The first fixing part 120 may include the protruding part 122. The protruding part 122 may protrude toward the side portion of the battery module B from the extension part 121. Specifically, the protruding part 122 may protrude from a lower area of the second portion 121b toward the battery module B. The protruding part 122 may be inserted in the first hole H1 of the battery module B.

An upper surface of the protruding part 122 may be in a horizontal form. Since the protruding part 122 is a portion for supporting the load of the battery module B primarily, it may be preferable that the upper surface of the protruding part 122 be formed horizontally to stably lift the battery module B. However, if an inner upper surface of the first hole H1 of the battery module B is not horizontal but inclined or has a geometrical shape, the upper surface of the protruding part 122 may also be formed to be inclined or have a geometrical shape corresponding to the inner upper surface of the first hole H1.

The protruding part 122 may decrease in thickness in an upward and downward direction toward the battery module B. Through this, in a process of mounting the battery module carrying apparatus 100 on the battery module B, the worker may easily seat the protruding part 122 in the first hole H1 of the battery module B.

The battery module carrying apparatus 100 may include the second fixing part 130. The second fixing part 130 may protrude downwards from the body part 110. Specifically, the second fixing part 130 may protrude downwards from a lower surface of the moving part 112. The second fixing part 130 may be seated in the second hole H2 of the battery module B.

The second fixing part 130 may include a spacer 131. The spacer 131 may be a portion protruding downwards primarily from the lower surface of the moving part 112. A diameter of the spacer 131 may be greater than a diameter of the second hole H2 of the battery module B. A lower end surface of the spacer 131 may be seated on an upper end surface of the second hole H2 in a state where an insertion part 132 is inserted in the second hole H2 of the battery module B. A length of the spacer 131 in an upward and downward direction may be greater than a distance between an upper surface of the battery module B and an upper end of the second hole H2. Through this, when the insertion part 132 is inserted in the second hole H2 of the battery module B, the lower surface of the moving part 112 may be prevented from being in direct contact with the upper surface of the battery module B, and thus, a housing of the battery module B may be prevented from being deformed or damaged by the moving part 112.

The second fixing part 130 may include the insertion part 132. The insertion part 132 may protrude downwards from the spacer 131. The insertion part 132 may be a portion directly inserted in the second hole H2 of the battery module B.

The second fixing part 130 may move upwards and downwards. Specifically, as the moving part 112 moves upwards and downwards, the second fixing part 130 may move upwards and downwards together with the moving part 112. The second fixing part 130 may be inserted in the second hole H2 of the battery module B when the moving part 112 descends. In addition, when the moving part 112 ascends, the second fixing part 130 may be removed from the second hole H2 of the battery module B.

The battery module carrying apparatus 100 may include the outer handle 140. The outer handle 140 may be connected to an upper portion of the base part 111. For example, the outer handle 140 may be provided in a bridge form that both end portions are connected to the base part 111. In the state where the battery module carrying apparatus 100 is mounted on the battery module B, the worker may grip the outer handle 140 to carry the battery module B. For the worker to easily grip the outer handle 140, the outer handle 140 may include a bar portion extending horizontally.

The battery module carrying apparatus 100 may include the inner handle 150. The inner handle 150 may be connected to an upper portion of the stopper 114. For example, the inner handle 150 may be provided in a bridge form that both end portions are connected to the stopper 114. When the inner handle 150 is pulled upwards, the stopper 114, the shaft 113, the moving part 112, and the second fixing part 130 connected to the inner handle 150 in sequence may ascend together. As the worker pulls the inner handle 150 upwards with respect to the outer handle 140 while gripping the outer handle 140 and the inner handle 150 simultaneously, the inner handle 150 may move upwards. In this case, for the worker to easily grip the inner handle 150, the inner handle 150 may include a bar portion extending horizontally.

The process of mounting the battery module carrying apparatus 100 on the battery module B is as follows.

With the battery module carrying apparatus 100 being slightly inclined to the battery module B, the protruding part 122 may be seated in the second hole H2 of the battery module B. In this process, as the worker lifts the inner handle 150, the second fixing part 130 may maintain an ascending state.

With the protruding part 122 being seated in the second hole H2 of the battery module B, the battery module carrying apparatus 100 may be set upright and the second fixing part 130 may be positioned above the first hole H1 of the battery module B.

In this state, if the worker releases the grip of the inner handle 150, the moving part 112 and the second fixing part 130 connected thereto may descend due to the elastic restoring force of the elastic member 115, and the insertion part 132 may be inserted inside the second hole H2 of the battery module B.

As above, as the protruding part 122 is inserted in the first hole H1 of the battery module B and the insertion part 132 is inserted in the second hole H2 of the battery module B, mounting the battery module carrying apparatus 100 on the battery module B may be completed.

The process described above may be performed at each of both side portions of the battery module B.

In this state, the worker may grip the outer handle 140 to lift the battery module B.

A process of separating the battery module carrying apparatus 100 from the battery module B may be understood as a reverse order of the process of mounting the battery module carrying apparatus 100 described above.

Some example embodiments described above in this specification or other example embodiments are not mutually exclusive or not distinguished from each other. In some example embodiments described above in this specification or other example embodiments, each element or function may be used together or combined.

For example, A element described in a specific example embodiment and/or drawing and B element described in another example embodiment and/or drawing may be combined. Therefore, even though a combination of elements is not directly described, the combination is possible excluding a case of describing that the combination is impossible.

The above detailed description is not to be restrictively construed in every aspect and is to be considered examples. The scope of the present disclosure should be determined by rational interpretations of the appended claims, and all changes within the equivalent scope of the present disclosure are included in the scope of the present disclosure.

### [Description of symbols]

100: Battery module carrying apparatus
110: Body part
111: Base part
112: Moving part
113: Shaft
114: Stopper
115: Elastic member
120: First fixing part
121: Extension part
121a: First portion
121b: Second portion
122: Protruding part
130: Second fixing part
131: Spacer
132: Insertion part
140: Outer handle
150: Inner handle
B: Battery module
H1: First hole
H2: Second hole

## Claims

1. A battery module carrying apparatus, which is detachably mounted in a first hole in a horizontal direction and a second hole in a vertical direction that are provided at each of both side portions of a battery module to carry the battery module, the battery module carrying apparatus comprising:
a body part disposed on a side portion of the battery module;
a first fixing part including an extension part extending downwards along the side portion of the battery module from the body part and a protruding part protruding from the extension part toward the side portion of the battery module in order to be inserted in the first hole; and
a second fixing part protruding downwards from the body part to be seated in the second hole,
wherein the second fixing part is configured to be movable upwards and downwards.

2. The battery module carrying apparatus of claim 1, wherein the body part includes:
a base part, when the battery module carrying apparatus is mounted on the battery module, of which a relative position to the battery module is fixed and to which the first fixing part is connected; and
a moving part disposed below the base part to be movable upwards and downwards relative to the base part, to a lower portion of which the second fixing part is connected,
wherein the second fixing part is inserted in the second hole when the moving part descends and is removed from the second hole when the moving part ascends.

3. The battery module carrying apparatus of claim 2,
wherein the moving part is provided with a restoring force in a downward direction so that the second fixing part in an ascending state descends to be positioned in a state inserted in the second hole.

4. The battery module carrying apparatus of claim 2,
wherein the body part further includes a shaft protruding above the moving part and penetrating the base part, a stopper connected to the shaft above the base part to limit a maximum descending position of the moving part, and an elastic member disposed between the base part and the moving part.

5. The battery module carrying apparatus of claim 4,
further comprising an outer handle connected to an upper portion of the base part and an inner handle connected to an upper portion of the stopper, wherein, as the inner handle is pulled upwards relative to the outer handle, the moving part ascends.

6. The battery module carrying apparatus of claim 2,
wherein a distance between the base part and the moving part when the moving part descends maximally in a state where the battery module carrying apparatus is unmounted on the battery module is greater than a distance between the base part and the moving part in a state where the battery module carrying apparatus is mounted on the battery module.

7. The battery module carrying apparatus of claim 1,
wherein the extension part includes a first portion provided in a plate shape.

8. The battery module carrying apparatus of claim 7,
wherein the extension part includes a plurality of second portions extending downwards from the first portion, and
wherein the protruding part protrudes from a lower area of each of the plurality of second portions toward the battery module.

9. The battery module carrying apparatus of claim 1,
wherein the extension part is length adjustable upwards and downwards.

10. The battery module carrying apparatus of claim 1,
wherein the protruding part decreases in thickness in an upward and downward direction toward the battery module.

11. The battery module carrying apparatus of claim 1,
wherein the second fixing part includes a spacer and an insertion part protruding downwards from the spacer to be inserted in the second hole of the battery module, and
wherein a diameter of the spacer is greater than a diameter of the second hole.

12. The battery module carrying apparatus of claim 11,
wherein a length of the spacer in an upward and downward direction is greater than a distance between an upper surface of the battery module and an upper end of the second hole.
